# EUROPEAN PATENT SPECIFICATION

(11) **EP 4 345 356 B1**
(45) Date of publication and mention of the grant of the patent: **09.04.2025**
(21) Application number: 22198364.6
(22) Date of filing: 28.09.2022
(51) Int. Cl.: F16L 55/027

(54) **FLOW RESTRICTOR AND METHOD**
DURCHFLUSSBEGRENZER UND VERFAHREN
LIMITEUR DE DÉBIT ET PROCÉDÉ

(43) Date of publication of application: 03.04.2024
(73) Proprietor: SFC KOENIG AG, 8953 Dietikon (CH)
(72) Inventor: LORENZELLI, Luca, 8953 Dietikon (CH); RYSER, Andreas, 8953 Dietikon (CH)
(74) Representative: Liebetanz, Michael

(56) References cited:
- EP-B1- 2 916 016
- US-A- 4 522 533

## Description

### TECHNICAL FIELD

The present invention relates to a flow restrictor comprising a sleeve-shaped base body and an expander element, wherein the expander element comprises a splaying body and a tensioning pin.

### PRIOR ART

US 2011/297263 discloses a flow restrictor with an exterior tube and an interior tube disposed within the exterior tube. A first flange is disposed at a distal end of the interior tube. An annular rib extends proximally from the first flange and has an interior diameter greater than an exterior diameter of the exterior tube. A second flange is disposed at a proximal end of the exterior tube. A ring member is disposed around the exterior tube between the annular rib of the first flange and the second flange.

CA 1165207A discloses a flow restrictor for insertion into the inlet of a pipe to restrict fluid flow within said pipe to a predetermined maximum: The flow restrictor is comprised of a tapered tubular hollow body portion having a smaller diameter and a larger diameter end. A cover plate is attached to the larger diameter end. An aperture having a predetermined cross-sectional area is located in the cover plate. The smaller diameter end is open to fluid flow. The predetermined cross-sectional area of the aperture determines the predetermined maximum fluid flow.

US 2009/133759 A1 discloses a hydraulic restrictor comprising: a passage along which hydraulic fluid flows; a member which extends along said passage, said member restricting the flow along the passage; and means for selectively securing said member at a plurality of different positions along the passage thereby to enable variation in the restriction on flow along the passage, said securing means securing said member at each said position by securing the member against the side wall of the passage.

### SUMMARY OF THE INVENTION

Based on this prior art it is an object of the present invention to provide a flow restrictor which is easier to install and provide a more secure positioning for a great range of pressure differences between high pressure in a bore and the outside pressure.

Such an object is achieved with a restrictor element comprising a sleeve-shaped base body and an expander element, where the expander element comprises a splaying body and a tensioning pin with a breaking zone between them. A breaking zone is provided between the splaying body and the tensioning pin. The splaying body has a central blindhole starting at the head surface of the spaying body and extending beyond the breaking zone into the tensioning pin to create after breaking the expander element at the breaking zone a predetermined restricted flow element.

Such a flow restrictor can be easily positioned in a bore of a component, placing the sleeve-shaped base body in the bore, especially with the base body's outer surface being flush with the outer surface of the component with the bore. Subsequently, the splaying body which is initially not positioned in the sleeve-shaped base body is pulled into the reception cavity of the sleeve-shaped base body until the splaying body is pressing the surrounding wall of the sleeve-shaped base body against the inside walls of the bore securing the unit of base body and expander element in the bore. Further pulling, optionally with a rotating movement part of the tensioning pin will break the tensioning pin at the breaking zone from the splaying body, so that the said unit of base body and splaying body of the expander element remains fixated in the bore. Since the internal cavity or blindhole of the splaying body is extending beyond the breaking zone, an internal through-passage is created and provides the function of a flow restrictor.

The diameter of the blindhole at the breaking zone is smaller than the innermost diameter of the breaking zone.

The central blindhole can comprise a larger diameter section at the head surface and a smaller diameter section at the end of the blindhole to better control the flow and the amount of flow restriction.

The larger diameter section can be a cylindrical section and the smaller diameter section can be a cylindrical section which are connected by an intermediate tapered section, providing two different flow restricting diameter steps with a well defined transition zone.

The splaying body can have a frustoconical head with a smaller diameter zone oriented to the breaking zone for an increasing resistance on the tensioning pin when the splaying body is pulled in the base body.

The base body and the expander element can be made of steel. The base body and the expander element can also be made of aluminum or an aluminum alloy, especially these elements can be cold-formed followed by a hardening step, especially a T6 hardening.

The head receiving portion of the base body can have a cylindrical inner surface or a conical surface tapering towards the outside directed surface creating a larger or lesser increasing force increase when the head is pulled in the base body.

The blindhole can have its end ending in the longitudinal direction such that when the splaying body is fully inserted in the head receiving portion in the base body said end does not extend beyond the outer surface of the base body, so that the tensioning pin is not weakened.

The tensioning pin can have, in a predetermined distance from the breaking zone, an enlarged diameter section allowing for creating a preassembled restrictor element by positioning the splaying body in the zone between the breaking zone and this enlarged diameter section. Preferably, said predetermined distance is between a third and the full length of the splaying body in its longitudinal direction.

A method of creating a predetermined flow restriction in a bore with a restrictor element as mentioned above comprises the steps of positioning the restrictor element in a bore of a component, placing the sleeve-shaped base body in the bore, pulling the splaying body which is initially not positioned in the sleeve-shaped base body into the reception cavity of the sleeve-shaped base body until the splaying body is pressing the surrounding wall of the sleeve-shaped base body against the inside walls of the bore securing the unit of base body and expander element in the bore, further pulling beyond a predetermined breaking force to break the tensioning pin at the breaking zone from the splaying body, so that the said unit of base body and splaying body of the expander element remains fixated in the bore, wherein the blindhole of the splaying body which extended beyond the breaking zone creates an internal through-passage and provides the function of a flow restrictor.

Within such a method, it is possible to push the sleeve-shaped base body in the bore until the base body's outer surface being flush with the outer surface of the component with the bore.

Finally such a method can have a pulling step and/or the further pulling step being accompanied with a rotating movement of the expander element through rotating the tensioning pin.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a flow restrictor according to an embodiment of the invention which is partly installed in a bore hole;
- Fig. 2: shows the flow restrictor of Fig. 1 with the splaying body fully inserted in the base body; and
- Fig. 3: shows a detail view of Fig. 2.

### DESCRIPTION OF PREFERRED EMBODIMENTS

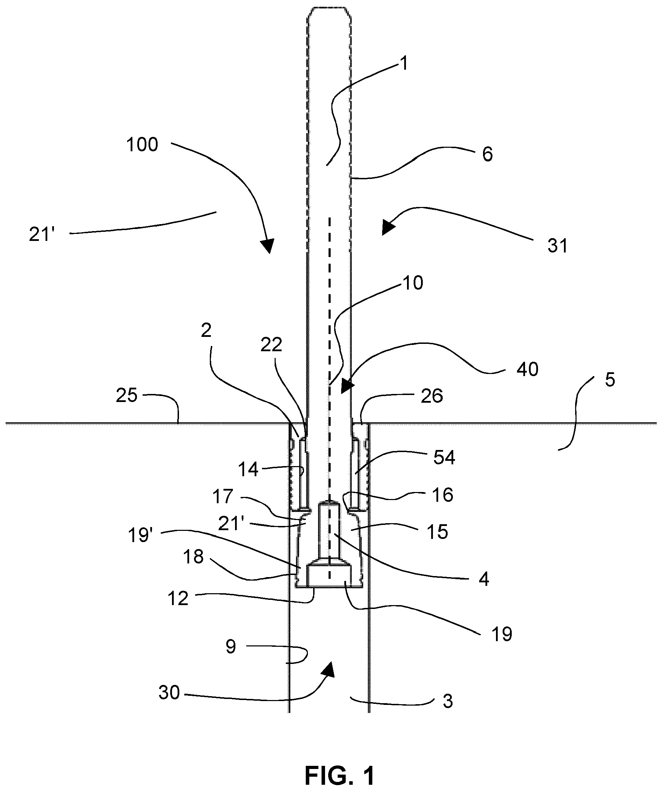

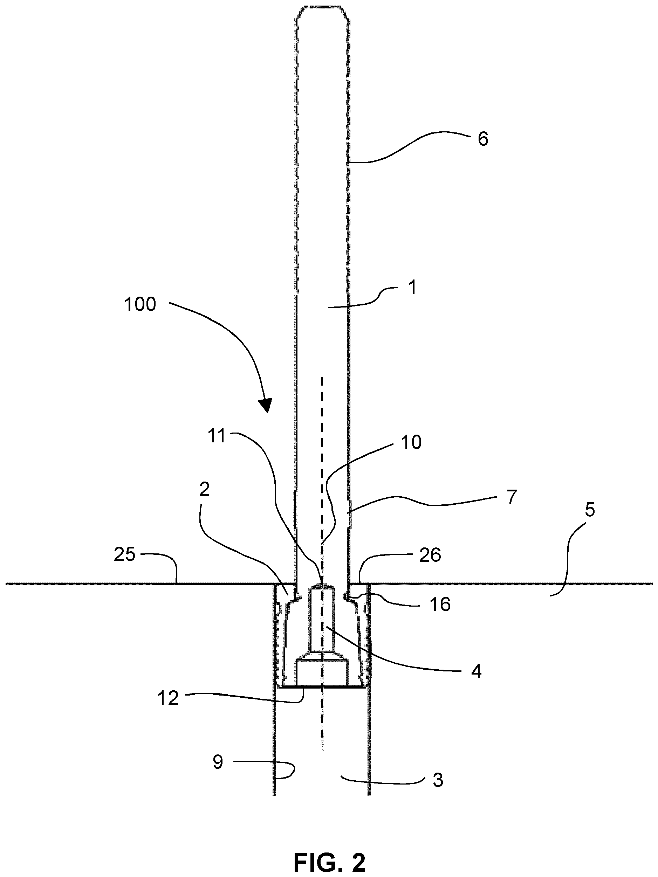

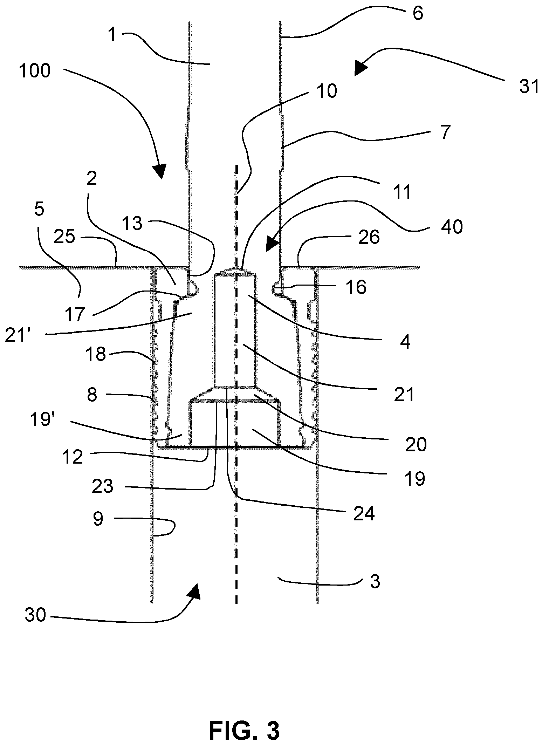

Fig. 1 shows a flow restrictor 100 according to an embodiment of the invention which is partly installed in a bore hole 3 of a component 5, while Fig. 2 shows the flow restrictor 100 of Fig. 1 with its splaying body 15 fully inserted in its base body 2. Finally, Fig. 3 shows a detail view of Fig. 2. The flow restrictor 100 is a closure made out of steel or aluminum or alloys of these metals for inserting into a bore 3 in a component 5, such as a bore in a valve block manifold, a hydraulic unit, or in general in a circuit where a fluid, especially a liquid, is flowing. The said flow restrictor element 100 comprises of a sleeve-shaped base body 2 that can be inserted into a bore 3 of the component 5 and whose outer surface 8 in the fitted state, lies tight against the inner surface of the bore 9.

The flow restrictor 100 comprises an expander element 40 having a tensioning pin 1 connected to a splaying body 15 that can brace the base body 2 inside the bore 3. The splaying body 15 is manufactured by a cold forming process and shaped conical. In other words, near the head surface 12 is a larger diameter section 19' compared to a section 21' close to the fracture zone 16. This geometry, in combination with the geometry of the inner surface 14 of the base body 2, that can be either cylindrical or conical with a matching angle to the conical geometry of the splaying body 15, in combination with the angle of the shoulder 17 of the splaying body 15, facilitates the insertion of the splaying body 15 inside the base body 2 and generates a progressive and smooth increasing force during the installation, that avoids any abrupt increase of the setting force and ensures a uniformly distributed transmission of the stress from the splaying body 15 to the base body 2. This stress comprises am increasing radial pressure on the base body 2 which is exerted on the inner surface 9 of the bore 3.

The easy-to-handle tensioning pin 1 facilitates the installation of the flow restrictor 100 in the bore 3 and the calibrated predetermined diameter of the breaking zone 16, allows to install the restrictor element 100 inside the bore 3 with a defined and reproducible force. When the predetermined breaking zone 16 shears off the splaying body 15, the splaying body 15 is fully inserted inside the base body 2 and the shoulder 17 geometry on the splaying body 15 is in full contact with the opposite complementary shoulder 22 geometry on the base body 2. The limitation of the tensile stress effected by design by the predetermined breaking zone does not only ensures the reproducibility of the installation process, but also defines the amount of plastic deformation of the base body 2 and sets an upper limit that prevents the part from getting damaged.

The base body 2 and splaying body are inserted into the component 5 as shown in Fig. 1. The base body 2 is pushed into the bore 3 until the upper external surface 26 of the base body 2 is flush with the surface 25 around the bore 3. This can be achieved with a hollow guide having an inner diameter accomodating the tensioning pin 1 and having an outer diameter large enough to be sufficiently larger than the hole diameter 9 to be able to be pushed on the flat surface 25. The splaying body 15 comprises the tensioning bolt or pin 1 with the predetermined breaking zone 16 in between. In other words, the breaking zone 16 is located below the front surface 26 of the base body 2. When the flow restrictor 100 is inserted in bore 3, i.e. the base body 2 is positioned in the bore 3 until the surfaces 26 and 25 are flush, with the splaying body 15 being not inserted or only partially extending into the base body 2, a traction force is applied on the tensioning pin 1 by means of a tool that anchors to the grooves 6 on the tensioning pin 1 which pulls the splaying body 15 inside the base body 2, so that the splaying body 15 presses the cylindrical outer surface of the base body 2 tight against the inner wall 9 of the bore 3 by producing a radial force which causes a plastic deformation of the inner wall 14 of the base body 2 that is transmitted to the outer wall of the base body 8.

The grooves 6 on the tensioning pin 1 can be reduced to one single element allowing to exert a tracking force on the tensioning pin 1. It can also be a combination of tracking and rotational force, e.g. drawing the tensioning pin 1 in a helix like movement out of the bore 3 and thus into the base body 1. This actuator element 6 can also be one or more hooks or bolts having a larger diameter than the pin 1 as such. Such a transversal bolt can be realized with a transversal hole through pin 1 and introducing a bolt extending on one or both side out of the diameter of the pin 1, which allows to position the base body 2 from the side of the pin 1 (before installing said bolt or hook) over the pin into the vicinity of the splashing bod head 15.

The pre-assembled state of the restrictor element 100 as shown in Fig. 2 and 3 (not shown in Fig. 1) comprises a section 7 with a slightly larger diameter on the tensioning pin 1, allowing in combination with a hollow cylindrical section 13 of the base body 2 with a finely tuned and predetermined value of the inner cylindrical diameter to set the restrictor element 100 in a defined, stable and reproducible state that defines the pre-assembled state of the restrictor element 100 as shown in Fig. 1 (without the component 5 of course) during transportation and before installation inside the bore 3 of such a component 5. In other words, the slightly larger diameter section 7 compared to the hollow cylindrical section 13 allows pushing the tensioning pin 1 through the bore of baes body 2 to provide a preassembled restrictor element with the base body 2 extending between the section 7 and the (in this direction) inverse tapered section 17.

In the fully-assembled state of the restrictor element 100 inside a bore 3 shown in Fig. 2 and Fig. 3, the grooves 18 on the outer surface of the base body 2 provide both the functions of anchoring to the walls 9 of the bore 3 and sealing, so that no passage of fluid occurs at this interface 8 from the region at higher pressure 30 inside the bore 3 to the region at lower pressure 31 outside the bore 3.

The splaying body 15 has a cavity 4 which is milled or cold formed symmetrically across the main axis of symmetry 10 of the tensioning pin 1 and splaying body 15. Such cavity 4 comprises up to three sections: a cylindrical section 19 of larger diameter on the side of lower head surface 12 where the restrictor element 100 faces the region 30 at higher pressure, a second cylindrical section 21 of smaller diameter extending beyond the breaking zone 16. This ensures that after breaking of the tensioning pin 1 at the pre-defined breaking zone 16 the splaying body 15 has a through bore open on the side that faces the region at lower pressure 31.

The embodiment of Fig. 3 has an intermediate conical section 20 that connects the two cylindrical sections 19 and 21, oriented in such a way to facilitate the flow from the region 30 at higher pressure to the region at lower pressure 31. It is also possible that there is only one single conical section tapering from the head surface to a smallest diameter of the cavity 4. It is possible that this conical section ends in a cylindrical portion 21 which extends into the breaking zone 16 but the tapering may also continue through the breaking zone 16.

The section of the cylindrical cavity 21 of smaller diameter or the section at the end 11 of the initial blindhole extends from the side of inside pressure zone 30 to a position where the breaking point 16 is located along the main axis 10 of symmetry of the restrictor element 100. In this way, in the fully assembled state of the restrictor element 100 inside the bore 3, after the tensioning pin 1 shears off the splaying body 15 in the position corresponding to the pre-determined breaking point 16, an opening is left on the side of the surface that faces the region at lower pressure 31, allowing passage of the fluid from region 30 to region 31.

The three sections 19, 20 and 21 forming the blindhole or cavity 4 are designed such that the ratio between the areas connecting them, meaning from the bore 3 to the cavity section of larger diameter 19 and from the intermediate conical section of the cavity 20 and the section of smaller diameter 21, defines a known and calibrated pressure drop at the respective interfaces 12, 23 and 24. The first restriction of the diameter appears to happen at the head surface 12 from the bore diameter, which is followed by the starting restriction surface 23 of base body 2 and finally achieved with the and restriction surface 24 of base body 2. With a linear or curved tapering the first restriction of the diameter at the head surface 12 s followed by a continuous restriction of the fluid flow until the breaking zone 16.

Furthermore, the section area 21 of the portion of the cavity 4 with smaller diameter determines the maximum flow rate according to the maximum pressure difference between the region where the fluid is present at higher pressure 30 and the region where the fluid is present at lower pressure 31; said maximum pressure difference is defined by the application where the restrictor element is used.

Finally, the cavity 4 in the splaying body 15 allows to some extent a deformation of the splaying body 15 itself in the radial direction, that facilitates the installation of the splaying body 15 inside the base body 2 by reducing the shear dragging force along the direction of the main axis of symmetry of restrictor element 100, while enhancing the transmission of stress and plastic deformation from the inner surface 14 of the base body 2 to the outer surface of the base body 8 in the radial direction.

### LIST OF REFERENCE SIGNS

| | | | |
|---|---|---|---|
| 1 | tensioning pin | 19 | larger diameter section of cavity |
| 2 | base body | | |
| 3 | bore | 19' | larger diameter section of splaying body |
| 4 | blindhole / cavity | | |
| 5 | component | 20 | intermediate conical section |
| 6 | grooves on the tensioning pin | 21 | section close to the fracture zone of cavity |
| 7 | section with a slightly larger diameter on the tensioning pin | | |
| | | 21' | section close to the fracture zone of splaying body |
| 8 | outer surface of splaying body | 22 | shoulder |
| | | 23 | starting restriction surface of base body |
| 9 | inner surface of bore | | |
| 10 | longitudinal axis | 24 | end restriction surface of base body |
| 11 | end of blindhole | | |
| 12 | head surface | 25 | surface of component |
| 13 | cylindrical section | 26 | outer surface of base body |
| 14 | inner surface of the splaying body | 30 | inside pressure zone |
| | | 31 | outside pressure zone |
| 15 | splaying body | 40 | expander element |
| 16 | fracture / breaking zone | 54 | head receiving portion |
| 17 | shoulder | 100 | flow restrictor |
| 18 | grooves | | |

## Claims

1. Restrictor element (100) comprising a sleeve-shaped base body (2) and an expander element (40), wherein the expander element (40) comprises a splaying body (15) and a tensioning pin (1), wherein a breaking zone (16) is provided between the splaying body (15) and the tensioning pin (1) and wherein the splaying body (15) has a central blindhole (4) starting at its head surface (12) and is extending beyond the breaking zone (16) into the tensioning pin (1).

2. Restrictor element (100) according to claim 1, wherein the diameter (21) of the blindhole (4) at the breaking zone is (16) is smaller than the innermost diameter of the breaking zone (16).

3. Restrictor element (100) according to claim 1 or claim 2, wherein the central blindhole (4) comprises a larger diameter section (19) at the head surface (12) and a smaller diameter section (21) at the end (11) of the blindhole (4).

4. Restrictor element (100) according to claim 3, wherein the larger diameter section (19) is a cylindrical section and the smaller diameter section (21) is a cylindrical section which are connected by an intermediate tapered section (20).

5. Restrictor element (100) according to any one of claims 1 to 4, wherein the splaying body (15) has a frustoconical head (19') with a smaller diameter zone (21') oriented to the breaking zone (16).

6. Restrictor element (100) according to any one of claims 1 to 5, wherein the base body (2) and the expander element (40) are made of steel.

7. Restrictor element (100) according to any one of claims 1 to 5, wherein the base body (2) and the expander element (40) are made of aluminum or an aluminum alloy.

8. Restrictor element (100) according to claim 7, wherein base body (2) and/or the expander element (40) are cold-formed followed by a hardening step, especially a T6 hardening.

9. Restrictor element (100) according to any one of claims 1 to 8, wherein the head receiving portion (54) of the base body (2) has a cylindrical inner surface (14) or a conical surface tapering towards the outside directed surface (26).

10. Restrictor element (100) according to any one of claims 1 to 9, wherein the blindhole (4) has its end (11) ending in the longitudinal direction (10) such that when the splaying body (15) is fully inserted in the head receiving portion (54) in the base body (2) said end (11) does not extend beyond the outer surface (26) of the base body.

11. Restrictor element (100) according to any one of claims 1 to 10, wherein the tensioning pin (1) has in a predetermined distance from the breaking zone (16) an enlarged diameter section (7) allowing for creating a preassembled restrictor element.

12. Restrictor element (100) according to claim 11, wherein the predetermined distance is between a third and the full length of the splaying body (2) in its longitudinal direction.

13. Method of creating a predetermined flow restriction in a bore with a restrictor element (100) according to any one of claims 1 to 12, comprising the steps of positioning the restrictor element (100) in a bore (3) of a component (5), placing the sleeve-shaped base body (2) in the bore, pulling the splaying body (15) which is initially not positioned in the sleeve-shaped base body (2) into the reception cavity (54) of the sleeve-shaped base body (2) until the splaying body (15) is pressing the surrounding wall of the sleeve-shaped base body against the inside walls of the bore (3) securing the unit of base body (2) and expander element in the bore (3), further pulling beyond a predetermined breaking force to break the tensioning pin (1) at the breaking zone (16) from the splaying body (15), so that the said unit of base body (2) and splaying body (15) of the expander element remains fixated in the bore (3), wherein the blindhole (4) of the splaying body (15) which extended beyond the breaking zone (16) creates an internal through-passage and provides the function of a flow restrictor.

14. Method according to claim 13, wherein placing the sleeve-shaped base body (2) in the bore comprises pushing the base body (2) into the bore (3) until the base body's (3) outer surface (26) being flush with the outer surface (25) of the component (5) with the bore (3).

15. Method according to claim 13, wherein the pulling step and/or the further pulling step is accompanied with a rotating movement of the expander element through rotating the tensioning pin (1).

## Patentansprüche

1. Durchflussbegrenzer (100) mit einem hülsenförmigen Grundkörper (2) und einem Spreizelement (40), wobei das Spreizelement (40) einen Spreizkörper (15) und einen Spannstift (1) aufweist, wobei eine Sollbruchstelle (16) zwischen dem Spreizkörper (15) und dem Spannstift (1) vorgesehen ist und wobei der Spreizkörper (15) von seiner Kopffläche (12) ausgehend ein zentrales Sackloch (4) aufweist und sich über die Sollbruchstelle (16) hinaus in den Spannstift (1) hinein erstreckt.

2. Durchflussbegrenzer (100) nach Anspruch 1, wobei der Durchmesser (21) des Sacklochs (4) an der Sollbruchstelle (16) kleiner ist als der innerste Durchmesser der Sollbruchstelle (16).

3. Durchflussbegrenzer (100) nach Anspruch 1 oder Anspruch 2, wobei das zentrale Sackloch (4) an der Kopffläche (12) einen Abschnitt (19) mit grösserem Durchmesser und am Ende (11) des Sacklochs (4) einen Abschnitt (21) mit kleinerem Durchmesser aufweist.

4. Durchflussbegrenzer (100) nach Anspruch 3, wobei der Abschnitt mit dem grösseren Durchmesser (19) ein zylindrischer Abschnitt und der Abschnitt mit dem kleineren Durchmesser (21) ein zylindrischer Abschnitt ist, die durch einen konischen Zwischenabschnitt (20) verbunden sind.

5. Durchflussbegrenzer (100) nach einem der Ansprüche 1 bis 4, wobei der Spreizkörper (15) einen kegelstumpfförmigen Kopf (19') mit einem zur Sollbruchstelle (16) hin orientierten Bereich (21') kleineren Durchmessers aufweist.

6. Durchflussbegrenzer (100) nach einem der Ansprüche 1 bis 5, wobei der Grundkörper (2) und das Spreizelement (40) aus Stahl gefertigt sind.

7. Durchflussbegrenzer (100) nach einem der Ansprüche 1 bis 5, wobei der Grundkörper (2) und das Spreizelement (40) aus Aluminium oder einer Aluminiumlegierung gefertigt sind.

8. Durchflussbegrenzer (100) nach Anspruch 7, wobei der Grundkörper (2) und/oder das Spreizelement (40) kaltverformt und anschliessend gehärtet, insbesondere T6-gehärtet, werden.

9. Durchflussbegrenzer (100) nach einem der Ansprüche 1 bis 8, **dadurch gekennzeichnet, dass** die Kopfaufnahme (54) des Grundkörpers (2) eine zylindrische Innenfläche (14) oder eine sich zur Aussenfläche (26) hin verjüngende Kegelfläche aufweist.

10. Durchflussbegrenzer (100) nach einem der Ansprüche 1 bis 9, wobei das Sackloch (4) mit seinem Ende (11) in Längsrichtung (10) endet, so dass das Ende (11) nicht über die Aussenfläche (26) des Grundkörpers hinausragt, wenn der Spreizkörper (15) vollständig in den Kopfaufnahmebereich (54) im Grundkörper (2) eingesetzt ist.

11. Durchflussbegrenzer (100) nach einem der Ansprüche 1 bis 10, **dadurch gekennzeichnet, dass** der Spannstift (1) in einem vorbestimmten Abstand von der Sollbruchstelle (16) einen im Durchmesser vergrösserten Abschnitt (7) aufweist, der die Herstellung eines vormontierten Durchflussbegrenzers ermöglicht.

12. Durchflussbegrenzer (100) nach Anspruch 11, wobei der vorgegebene Abstand zwischen einem Drittel und der vollen Länge des Spreizkörpers (2) in dessen Längsrichtung liegt.

13. Verfahren zum Erzeugen einer vorbestimmten Strömungsbegrenzung in einer Bohrung mit einem Durchflussbegrenzer (100) nach einem der Ansprüche 1 bis 12, mit den Schritten: Positionieren des Durchflussbegrenzers (100) in einer Bohrung (3) eines Bauteils (5), Einsetzen des hülsenförmigen Grundkörpers (2) in die Bohrung, Ziehen des zunächst nicht im hülsenförmigen Grundkörper (2) positionierten Spreizkörpers (15) in den Aufnahmehohlraum (54) des hülsenförmigen Grundkörpers (2), bis der Spreizkörper (15) die umlaufende Wand des hülsenförmigen Grundkörpers gegen die Innenwände der Bohrung (3) drückt und so die Einheit aus Grundkörper (2) und Spreizelement in der Bohrung (3) sichert, weiteres Ziehen über eine vorbestimmte Bruchkraft hinaus, um den Spannstift (1) an der Sollbruchstelle (16) vom Spreizkörper (15) zu brechen, so dass die Einheit aus Grundkörper (2) und Spreizkörper (15) des Spreizelements in der Bohrung (3) fixiert bleibt, wobei das Sackloch (4) des Spreizkörpers (15), das sich über die Sollbruchstelle (16) hinaus erstreckt, einen inneren Durchgang schafft und die Funktion eines Durchflussbegrenzers bereitstellt.

14. Verfahren nach Anspruch 13, wobei das Einsetzen des hülsenförmigen Grundkörpers (2) in die Bohrung darin besteht, dass der Grundkörper (2) in die Bohrung (3) geschoben wird, bis die Aussenfläche (26) des Grundkörpers (3) mit der Aussenfläche (25) des Bauteils (5) mit der Bohrung (3) bündig ist.

15. Verfahren nach Anspruch 13, wobei der Zugschritt und/oder der weitere Zugschritt mit einer Drehbewegung des Spreizelements durch Drehen des Spannstiftes (1) einhergeht.

## Revendications

1. Limiteur de débit (100) comprenant un corps de base (2) en forme de manchon et un élément d'expansion (40), dans lequel l'élément d'expansion (40) comprend un corps d'évasement (15) et un axe de tension (1), dans lequel une zone de rupture (16) est prévue entre le corps d'évasement (15) et l'axe de tension (1) et dans lequel le corps d'évasement (15) a un trou borgne central (4) commençant à sa surface de tête (12) et s'étendant au-delà de la zone de rupture (16) dans l'axe de tension (1).

2. Limiteur de débit (100) selon la revendication 1, dans lequel le diamètre (21) du trou borgne (4) au niveau de la zone de rupture (16) est inférieur au diamètre le plus intérieur de la zone de rupture (16).

3. Limiteur de débit (100) selon la revendication 1 ou la revendication 2, dans lequel l'orifice central (4) comprend une section de plus grand diamètre (19) à la surface de la tête (12) et une section de plus petit diamètre (21) à l'extrémité (11) de l'orifice (4).

4. Limiteur de débit (100) selon la revendication 3, dans lequel la section de plus grand diamètre (19) est une section cylindrique et la section de plus petit diamètre (21) est une section cylindrique qui sont reliées par une section conique intermédiaire (20).

5. Limiteur de débit (100) selon l'une quelconque des revendications 1 à 4, dans lequel le corps d'évasement (15) a une tête tronconique (19') avec une zone de plus petit diamètre (21') orientée vers la zone de rupture (16).

6. Limiteur de débit (100) selon l'une quelconque des revendications 1 à 5, dans lequel le corps de base (2) et l'élément d'expansion (40) sont en acier.

7. Limiteur de débit (100) selon l'une quelconque des revendications 1 à 5, dans lequel le corps de base (2) et l'élément d'expansion (40) sont en aluminium ou en alliage d'aluminium.

8. Limiteur de débit (100) selon la revendication 7, dans lequel le corps de base (2) et/ou l'élément d'expansion (40) sont formés à froid et suivis d'étape de durcissement, en particulier d'un durcissement T6.

9. Limiteur de débit (100) selon l'une quelconque des revendications 1 à 8, dans lequel la partie de réception de la tête (54) du corps de base (2) présente une surface intérieure cylindrique (14) ou une surface conique s'amincissant vers la surface extérieure dirigée (26).

10. Limiteur de débit (100) selon l'une quelconque des revendications 1 à 9, dans lequel le trou borgne (4) a son extrémité (11) qui se termine dans la direction longitudinale (10) de sorte que lorsque le corps d'évasement (15) est complètement inséré dans la partie de réception de la tête (54) dans le corps de base (2), ladite extrémité (11) ne dépasse pas la surface extérieure (26) du corps de base.

11. Limiteur de débit (100) selon l'une quelconque des revendications 1 à 10, dans lequel la goupille de tension (1) présente, à une distance prédéterminée de la zone de rupture (16), une section de diamètre élargi (7) permettant de créer un limiteur de débit préassemblé.

12. Limiteur de débit (100) selon la revendication 11, dans lequel la distance prédéterminée est comprise entre un tiers et la longueur totale du corps d'évasement (2) dans sa direction longitudinale.

13. Procédé de création d'une restriction d'écoulement prédéterminée dans un alésage avec un limiteur de débit (100) selon l'une quelconque des revendications 1 à 12, comprenant les étapes suivantes : positionnement de l'limiteur de débit (100) dans un alésage (3) d'un composant (5), placement du corps de base en forme de manchon (2) dans l'alésage, tirer le corps d'évasement (15) qui n'est pas initialement positionné dans le corps de base en forme de manchon (2) dans la cavité de réception (54) du corps de base en forme de manchon (2) jusqu'à ce que le corps d'évasement (15) presse la paroi environnante du corps de base en forme de manchon contre les parois intérieures de l'alésage (3) en fixant l'unité du corps de base (2) et de l'élément d'expansion dans l'alésage (3), en tirant encore au-delà d'une force de rupture prédéterminée pour casser la goupille de tension (1) au niveau de la zone de rupture (16) du corps d'évasement (15), de sorte que ladite unité de corps de base (2) et le corps d'évasement (15) de l'élément d'expansion restent fixés dans l'alésage (3), dans lequel le trou borgne (4) du corps d'évasement (15) qui s'est étendu au-delà de la zone de rupture (16) crée un passage interne et assure la fonction d'un réducteur de débit.

14. Procédé selon la revendication 13, dans lequel la mise en place du corps de base en forme de manchon (2) dans l'alésage consiste à pousser le corps de base (2) dans l'alésage (3) jusqu'à ce que la surface extérieure (26) du corps de base (3) affleure la surface extérieure (25) du composant (5) dans l'alésage (3).

15. Procédé selon la revendication 13, dans lequel l'étape de traction et/ou l'étape de traction supplémentaire s'accompagne d'un mouvement de rotation de l'élément expanseur par la rotation de la goupille de tension (1).
